# DEMANDE DE BREVET EUROPEEN

(11) **EP 2 813 287 A2**
(43) Date de publication de la demande: **17.12.2014**
(21) Numéro de dépôt: 14178564.2
(22) Date de dépôt: 22.06.2012
(51) Int. Cl.: B01J 13/00, B01J 13/18

(54) **Nanotraceurs pour le marquage d'eaux d'injection de champs pétroliers**

(30) Priorité: 22.06.2011 FR 1155513
(62) Demande divisionnaire de: 12728613.6
(71) Demandeur: Total SA, 92400 Courbevoie (FR)
(72) Inventeur: Perriat, Pascal, 69001 LYON (FR); Crowther, Nicolas, 38070 SAINT-QUENTIN-FALLAVIER (FR); Martini, Matteo, 69006 LYON (FR); Tillement, Olivier, 69270 FONTAINES SAINT MARTIN (FR); Brichart, Thomas, 56000 VANNES (FR); Agenet, Nicolas, 64000 PAU (FR)
(74) Mandataire: Cabinet Plasseraud

(57) **Abrégé**

Le domaine de cette invention est celui de l'exploration et de l'exploitation de gisements pétroliers.

Plus précisément, cette invention concerne la mise au point de nanoparticules, utilisables comme traceurs, pour suivre le mouvement de fluide injectés dans un gisement pétrolier.

Les fluides injectés diffusent à travers un milieu solide géologique qui constitue le gisement pétrolier, permettant ainsi d'étudier ce dernier en suivant le parcours des fluides injectés. L'objectif est notamment de contrôler les flux entre le(s) puits d'injection et le(s) puits de production et/ou d'évaluer les volumes de pétrole en réserve et d'eau dans le gisement et, in fine, d'optimiser l'exploration et l'exploitation pétrolière.

## Description

Le domaine de cette invention est celui de l'exploration et de l'exploitation de gisements pétroliers.

Plus précisément, cette invention concerne la mise au point de nanoparticules, utilisables comme traceurs, pour suivre le mouvement de fluides injectés dans un gisement pétrolier.

Les fluides injectés diffusent à travers un milieu solide géologique qui constitue le gisement pétrolier, permettant ainsi d'étudier ce dernier en suivant le parcours des fluides injectés. L'objectif est notamment de contrôler les flux entre le(s) puits d'injection et le(s) puits de production et/ou d'évaluer les volumes de pétrole en réserve et d'eau dans le gisement et, in fine, d'optimiser l'exploration et l'exploitation pétrolière.

### ARRIERE-PLAN TECHNOLOGIQUE

Il est bien connu dans l'exploitation pétrolière d'un gisement, que le plus souvent, on n'extrait pas plus de la moitié, voire moins, du pétrole présent à l'origine dans le gisement. La récupération par les moyens primaires, c'est-à-dire l'utilisation de l'énergie d'extraction résultant de gaz ou de liquides présents dans le sous-sol sous l'effet d'une certaine pression dans le gisement permet seulement d'extraire de faibles pourcentages du pétrole total présent dans le gisement. Pour compléter cette récupération primaire, on procède à une récupération secondaire : elle consiste à mettre en oeuvre ce que l'on dénomme une production par « *water drive »* ou « *water flooding* », c'est-à dire en injectant de l'eau dans un puits (puits d'injection) à un endroit du gisement, de manière à pousser le pétrole du gisement hors du sous-sol, par au moins un autre puits appelé « puits de production ».

Pour connaitre le comportement de l'eau d'injection, il est connu d'y ajouter des traceurs aisément détectables dans le liquide. Ces traceurs permettent de suivre l'eau d'injection. La mesure de la quantité de traceur au niveau des puits de production permet de connaître le volume et la répartition du fluide d'injection dans la formation. En outre, l'interaction traceur/huile peut permettre de déterminer la proportion des liquides du réservoir que constitue le gisement pétrolier. C'est l'un des paramètres les plus importants qui peut être déterminé par l'utilisation de tels fluides de traçage, puisque ce paramètre permet, d'une part, d'ajuster le programme d'injection d'eau, et d'autre part, d'évaluer la quantité de pétrole restant à produire. Dès lors que le fluide contenant le traceur a été détecté au(x) puits de production, le procédé d'étude permettant l'analyse, le contrôle et la récupération optimisée de pétrole, nécessite que la concentration en traceur dans le fluide produit en sortie soit mesurée continuellement ou non, de manière à pouvoir tracer des courbes de concentration en traceurs en fonction du temps ou en fonction du volume de fluide produit.

Les traceurs dans les eaux d'injection pour gisements pétroliers permettent également de détecter des aberrations dans les débits provoqués par des différentiels de pression dans le gisement, qui sont provoqués par des facteurs autres que l'injection d'eau et qui dégradent les performances.

Le cahier des charges des traceurs utilisables dans ces eaux d'injection pour l'optimisation de la récupération de pétrole comprend les spécifications suivantes :
- économique ;
- compatible avec les fluides naturellement présents dans le gisement, et avec la roche pétrolifère en elle-même ainsi qu'avec les fluides injectés dans le gisement, à savoir les liquides (eaux) d'injection;
- détection qualitative et quantitative aisée du traceur quels que soient les matériaux présents dans le fluide en sortie du puits de production. Par exemple, une solution aqueuse de chlorure de sodium ne peut être utilisée comme traceur, en raison du fait que la plupart des champs pétrolifères contiennent de l'eau de mer et donc du chlorure de sodium en quantité substantielle, de sorte que la détection de chlorure de NaCl utilisé comme traceur serait particulièrement difficile ;
- traceur furtif, c'est-à-dire non aisément absorbable dans le milieu solide traversé ou éliminable du fluide de traçage, puisque dans la technique analytique utilisée, on détermine la concentration en traceur dans les fluides produits en sortie et on la compare avec celle des fluides injectés dans le(s) puits d'injection ;
- résistance du traceur à la contamination bactérienne, aux hautes températures et hautes pressions existant dans les gisements pétroliers ;
- offrir la possibilité au traceur d'interagir ou non avec l'environnement du gisement, à savoir les milieux géologiques pétrolifères ou non ;
- accès à un grand nombre de traceurs et codages différents pour des détections simultanées possibles (plusieurs puits d'injections) ou des essais de traçages successifs dans le temps.

Concernant l'état de la technique propre à de tels traceurs pour des eaux d'injection (fluide de traçage) permettant de sonder des gisements pétroliers par diffusion entre un puits d'injection et un puits de production, on peut citer les brevets US 4,231,426-B1 et 4,299,709-B1 qui divulguent des fluides traceurs aqueux comprenant de 0,01 à 10 % en poids d'un sel de nitrate associé à un agent bactéricide choisi parmi les composés aromatiques (benzène, toluène, xylène).

La demande de brevet canadien CA 2 674 127-A1 est relative à un procédé consistant à utiliser un isotope naturel du carbone 13 pour l'identification de percée précoce des eaux d'injection dans des puits de pétrole.

Par ailleurs, il existe une dizaine de familles de molécules adaptées et validées actuellement comme traceur pour eaux d'injection dans des gisements pétroliers. Ces familles de molécules sont par exemple les acides benzoïques fluorés ou les acides naphtalènes sulfoniques.

Les molécules traceurs connues et utilisées ont une signature chimique/radioactive spécifique. Ces traceurs connus peuvent se détecter avec une grande sensibilité mais présentent néanmoins trois inconvénients majeurs :
- leur quantification réclame un processus assez complexe et cher, et ne peut se faire que dans un centre spécialisé, souvent éloigné des sites de production ;
- ces molécules peu nombreuses ne permettent pas d'effectuer un multi-marquage ou des marquages répétés ;
- certains de ces marqueurs connus sont voués à disparaitre en raison de leur impact négatif sur l'environnement.

En outre, le site de *"Institute for Energy Technology"* (IFE) a mis en ligne une présentation power point intitulée SIP 2007 - 2009 « New functional tracers based on nanotechnology and radiotracer generators Department for Reservoir and Exploration Technology » (dernière modification en date du 7 Mars 2011). En particulier, ce document suggère l'utilisation de nanoparticules modifiées en surface, à titre de traceur pour le contrôle des flux dans des gisements pétroliers et des puits de pétrole et dans des études de procédés. Cette présentation décrit des nanoparticules traceurs fonctionnalisées comprenant un coeur à base Gd₂O₃ et un revêtement de surface à base de siloxane fonctionnalisé avec des molécules additionnelles. Il est également suggéré que le coeur en terre rare et/ou les molécules additionnelles peuvent émettre des signaux lumineux par fluorescence ou des signaux radioactifs.

Dans un tout autre domaine, la demande de brevet français FR2867180-A1 décrit des nanoparticules hybrides comprenant, d'une part, un coeur constitué d'un oxyde de terre rare, éventuellement dopé avec une terre rare ou un actinide ou un mélange de terres rares ou bien un mélange de terres rares et d'actinide et, d'autre part, un enrobage autour de ce coeur, ledit enrobage étant constitué majoritairement de polysiloxane fonctionnalisé par au moins un ligand biologique greffé par liaison covalente. Le coeur peut être à base Gd₂O₃ dopé par du Tb³⁺ ou par de l'uranium et l'enrobage de polysiloxane peut être obtenu en faisant réagir un aminopropyltriéthoxysilane, un tétraéthylsilicate et de la triéthylamine. Ces nanoparticules sont utilisées en tant que sondes pour la détection, le suivi, et la quantification de systèmes biologiques.

La demande de brevet français FR2922106-A1 relève du même domaine technique et vise l'utilisation de ces nanoparticules comme agents radio sensibilisants pour augmenter l'efficacité de radiothérapie. Ces nanoparticules ont une taille comprise entre 10 et 50 nanomètres.

### PROBLEME TECHNIQUE ET OBJECTIFS A ATTEINDRE

Dans ce contexte, la présente invention vise à satisfaire au moins l'un des objectifs suivants :
- proposer un nouveau procédé d'étude d'un milieu solide, par exemple un gisement pétrolier, par diffusion d'un liquide au travers dudit milieu solide, qui soit simple à mettre en oeuvre et économique ;
- remédier aux inconvénients des traceurs pour eaux d'injection de gisements pétroliers selon l'art antérieur ;
- fournir un traceur qui suit parfaitement les eaux d'injection dans leur diffusion (percolation), au travers des milieux solides que constituent les gisements pétroliers, sans présenter d'interaction avec le sous-sol géologique traversé (ni attraction, ni répulsion) ;
- fournir un traceur pour eaux d'injection de gisements pétroliers dont les interactions (attraction - répulsion) vis-à-vis du milieu géologique au travers duquel il percole, sont contrôlables à dessein ;
- fournir un nouveau traceur furtif pour eaux d'injection de gisements pétroliers ;
- fournir un nouveau traceur pour eaux d'injection de gisements pétroliers possédant une sensibilité et/ou facilité de détection substantiellement améliorée par rapport aux traceurs connus jusqu'à ce jour ;
- fournir un nouveau traceur pour eaux d'injection de gisements pétroliers possédant plusieurs signaux aisément détectables pour réaliser une multi détection et multiplier les analyses au cours du temps ou de l'espace ;
- fournir un nouveau traceur pour eaux d'injection de gisements pétroliers et co-compatible ;
- fournir un nouveau traceur pour eaux d'injection de gisements pétroliers stable sur le plan physique, chimique et biologique dans les milieux solides géologiques que constituent les gisements pétroliers ;
- fournir un nouveau liquide, en particulier de nouvelles eaux d'injection, pour gisements pétroliers utilisables notamment dans un procédé d'étude d'un milieu solide par exemple un gisement pétrolier par diffusion dudit liquide au travers dudit milieu solide ;
- fournir un nouveau procédé de synthèse de tels traceurs qui soit simple et économique à mettre en oeuvre.

### BREVE DESCRIPTION DE L'INVENTION

Ces objectifs, parmi d'autres, sont atteints par l'invention qui concerne en premier lieu des nanoparticules pour leur utilisation dans l'étude d'un gisement pétrolier, lesdites nanoparticules étant caractérisées en ce qu'elles comprennent :
- un coeur constitué d'un métal noble ou d'un alliage de métaux nobles,
- une matrice comprenant (i) des polysiloxanes et (ii) un fluorophore organométallique lié de manière covalente aux polysiloxanes, ladite matrice étant fonctionnalisée à sa surface pour former des liaisons silanes Si-R, lesdits radicaux -R étant constitués pour au moins 50%, de préférence au moins 75%, de composés hydrophiles neutres ou chargés, de préférence parmi des polyéthers ou des polyols, ou leurs mélanges.

L'invention concerne en second lieu un procédé de préparation d'une solution colloïdale de nanoparticules utilisable pour l'étude d'un gisement pétrolier, ledit procédé comprenant les étapes suivantes :
i. on synthétise un coeur de métal noble enrobé d'une matrice de polysiloxane préfonctionnalisée avec des silanes hydrophiles, au sein d'une microémulsion inverse,
ii. on extrait une solution colloïdale aqueuse de nanoparticules par décantation après déstabilisation de la microémulsion, par exemple dans un mélange eau/alcool,
iii. on chauffe les nanoparticules à au moins 50°C, par exemple, environ 80°C.

En troisième lieu, l'invention concerne un liquide d'injection pour l'étude d'un gisement pétrolier, comprenant des nanoparticules telles que définies ci-dessus, ou une solution colloïdale de nanoparticules susceptible d'être obtenue par le procédé tel que défini ci-dessus.

L'invention porte également sur l'utilisation de ces nanoparticules comme traceurs dans des eaux d'injection d'un gisement pétrolier, lesquels sont destinés à l'étude dudit gisement par diffusion au travers de celui-ci, en vue notamment de contrôler les flux entre un puits d'injection et un puits de production et/ou d'évaluer les volumes de pétrole en réserve dans le gisement.

### DESCRIPTION DETAILLEE DE L'INVENTION

### Les nanoparticules

Les nanoparticules selon l'invention sont destinées à leur utilisation comme traceurs dans l'étude d'un gisement pétrolier, lesdites nanoparticules étant caractérisées en ce qu'elles comprennent :
- un coeur constitué essentiellement d'un métal noble ou d'un alliage de métaux nobles,
- une matrice comprenant (i) des polysiloxanes et (ii) un fluorophore organométallique lié de manière covalente aux polysiloxanes, ladite matrice étant fonctionnalisée à sa surface pour former des liaisons silanes Si-R, lesdits radicaux -R étant constitués pour au moins 50%, de préférence au moins 75%, de composés hydrophiles neutres ou chargés, de préférence parmi des polyéthers ou des polyols, ou leurs mélanges.

Les nanoparticules selon l'invention sont détectables, c'est-à-dire que l'on peut identifier leur présence ou non dans le milieu au-delà d'une certaine concentration et que l'on peut même quantifier leur concentration dès lors qu'elles sont présentes dans le milieu.

Ces nanoparticules sont aptes à former une suspension colloïdale stable en milieu salin, qui sédimente peu. Par exemple, cette suspension ne présente pas de précipitation ou d'agglomération avec le temps, e.g. après 6 mois à température ambiante.

Le coeur des nanoparticules permet de structurer la nanoparticule. Selon la présente invention, le coeur est constitué essentiellement d'un métal noble, par exemple l'or, l'argent ou le platine, et/ou un alliage de métaux nobles. Dans un mode de réalisation préféré, le coeur est essentiellement constitué de particules d'or.

En effet, il a été constaté, de manière surprenante, que les nanoparticules obtenues selon l'invention sont plus denses et de structure plus régulière que celles réalisées avec d'autres matériaux pour le choix du coeur. En outre, l'or présente dans certains cas un effet d'antenne qui permet alors avantageusement d'amplifier le signal fluorescent émis par le fluorophore organométallique de la matrice lors de la détection.

L'or, avec d'autres métaux nobles comme l'Ag, Pd, Pt, Ir, ou Rh, est également détectable par la méthode de détection ICP (ou spectrométrie par torche à plasma) et peut être utilisé comme référence interne pour la détection des nanoparticules et de leur éventuelle dégradation.

Enfin, l'or présente l'avantage d'être aussi détectable par absorption plasmon permettant la détection et la quantification des nanoparticules à des concentrations très faibles, par exemple, au niveau de la particule unique, en particulier après une dispersion d'un volume donnée sur un support. On peut détecter une particule dans 10 µL au moins, préférentiellement 100 µL.

Les particules d'or formant le coeur des nanoparticules ont une taille d'au moins 3 nm, de préférence comprise entre 5 nm et 15 nm.

La matrice forme une couche enrobant le coeur de métaux nobles de la nanoparticule. Elle permet d'encapsuler les molécules détectables pour la détection et/ou la quantification des nanoparticules.

La matrice des nanoparticules selon l'invention comprend des polysiloxanes et au moins un fluorophore organométallique lié de manière covalente aux polysiloxanes. Dans un mode de réalisation spécifique, elle est constituée essentiellement de polysiloxanes, fonctionnalisés sur la surface extérieure des nanoparticules et encapsulant des fluorophores organométalliques.

L'ensemble matrice et coeur forment des nanoparticules d'un diamètre moyen de préférence compris entre 20 nm et 100 nm, par exemple, compris entre 20 nm et 50 nm. Dans un mode de réalisation avantageux, les nanoparticules selon l'invention ont un indice de polydispersité inférieur à 0,5, de préférence inférieur à 0,3, ou inférieur à 0,2, par exemple inférieur à 0,1.

La distribution de taille des nanoparticules est par exemple mesurée à l'aide d'un granulomètre commercial, tel qu'un granulomètre Malvern Zêta sizer Nano-S basé sur la PCS (Photon Correlation Spectroscopy). Cette distribution est caractérisée par un diamètre moyen et un indice de polydispersité.

Au sens de l'invention, par « diamètre moyen » on entend la moyenne harmonique des diamètres des particules. L'indice de polydispersité fait référence à la largeur de la distribution en taille dérivant de l'analyse des cumulants. Ces deux caractéristiques sont décrites dans la norme ISO 13321:1996.

La matrice peut comprendre le cas échéant, d'autres matériaux, choisis dans le groupe constitué par les silices, les alumines, les zircones, les aluminates, les aluminophosphates, les oxydes métalliques, ou encore les métaux (exemple : Fe, Cu, Ni, Co...) passivés en surface par une couche du métal oxydé ou d'un autre oxyde et leurs mélanges et alliages.

Une fonction essentielle de la matrice est de maintenir les fluorophores organométalliques dans les nanoparticules et en particulier des les protéger des agressions de l'environnement extérieur.

Les fluorophores organométalliques permettent de produire un ou plusieurs signaux détectables par nanoparticule. Les fluorophores organométalliques utilisés dans les nanoparticules selon l'invention sont de préférence choisis de manière à produire un signal fluorescent stable dans le temps et qui soit peu influencé par les conditions physico-chimiques de l'environnement traversé (par exemple températures, pH, compositions ioniques, solvants, conditions redox ...).

De préférence, les fluorophores organométalliques contenus dans la matrice des nanoparticules sont choisis parmi les vanadates ou les oxydes de terres rares, ou leurs mélanges. Dans un mode de réalisation spécifique, ils sont choisis parmi les lanthanides, leurs alliages et leurs mélanges, liés à des molécules complexantes.

Dans un mode de réalisation préféré, les fluorophores organométalliques sont détectables par fluorescence résolue dans le temps. Les lanthanides liés à des molécules complexantes sont alors particulièrement préférés.

Les métaux de la série des lanthanides comprennent les éléments de numéros atomiques de 57 (lanthane) à 71 (lutécium). Par exemple, on choisira les lanthanides dans le groupe constitué par : Pr, Nd, Sm, Eu, Tb, Dy, Ho, Er, Tm et Yb et leurs mélanges et/ou alliages, liés à des molécules complexantes.

Par « molécules complexantes » ou « agent chélatant », on entend toute molécule capable de former avec un agent métallique, un complexe comprenant au moins deux liaisons de coordination.

Dans un mode de réalisation préféré, on choisira un agent complexant ayant une coordinance d'au moins 6, par exemple au moins 8, et une constante de dissociation du complexe, pKd, supérieure à 10 et de préférence supérieur à 15, avec un lanthanide.

Au sens de l'invention, par constante de dissociation pKd, on entend la mesure de l'équilibre entre les ions à l'état complexé par les ligands et ceux libres dissociés dans le solvant. Précisément, c'est moins le logarithme en base 10 du produit de dissociation (-log(Kd)), défini comme la constante d'équilibre de la réaction qui traduit le passage de l'état complexé à l'état ionique.

De tels agents complexants sont de préférence des molécules chélatantes polydentates choisies parmi les familles de molécules de type polyamines, polyacides carboxyliques et possédant un nombre de sites potentiels de coordination élevé de préférence supérieur à 6, comme certains macrocycles.

Dans un mode de réalisation plus préféré, on choisira le DOTA, ou acide 1,4,7,10-tétraazacyclododécane-1,4,7,10-tétraacétique, de formule suivante : 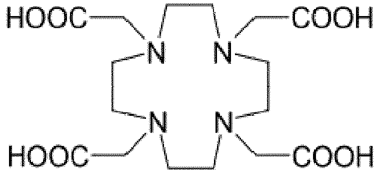 ou l'un de ses dérivés.

La matrice peut également contenir, outre l'agent complexant, un agent cyclique, par exemple greffé aux polysiloxanes.

Par « agent cyclique », on entend une molécule organique, comportant au moins un cycle ou hétérocycle aromatique, de préférence choisi parmi le benzène, la pyridine ou leurs dérivés, et susceptibles d'amplifier le signal fluorescent émis par le fluorophore organométallique, par exemple un agent complexant lié au lanthanide. Ces agents cycliques, intéressants s'ils sont caractérisés par une forte absorbance, sont utilisés en particulier pour amplifier le signal fluorescent émis par les fluorophores organométalliques (effet d'antenne par transfert de l'excitation de l'agent vers le fluorophore).

L'agent cyclique peut être greffé de manière covalente soit directement aux polysiloxanes de la matrice, soit au fluorophore organométallique.

Dans un mode de réalisation spécifique, les fluorophores organométalliques constitués d'un lanthanide avec un agent complexant sont greffés aux polysiloxanes de manière covalente via une fonction amide.

La matrice des nanoparticules selon l'invention est fonctionnalisée à sa surface. La fonctionnalisation de la matrice comprend la formation de liaisons silanes Si-R, lesdits radicaux -R étant constitués pour au moins 50%, de préférence au moins 75% de composés hydrophiles neutres ou chargés, de préférence parmi des polyéthers ou des polyols, ou leurs mélanges.

Dans un mode de réalisation préféré, la fonctionnalisation des nanoparticules est réalisée de sorte à ce que le potentiel zêta des nanoparticules mesuré à un pH à 6,5 soit inférieur à +10 mV.

Au sens de l'invention, le terme « potentiel zêta » fait référence au potentiel électrocinétique dans les systèmes colloïdaux. C'est le potentiel électrique de la double couche de surface ou encore la différence de potentiel entre le solvant et la couche de liquide attachée à la particule. Le potentiel zêta peut être mesuré avec le même appareil que celui utilisé pour mesurer la distribution de taille comme décrit dans l'article «zêta potential of colloïds in Water », ASTM Standard D 4187-82, American Society for Testing and Materials, 1985.

La fonctionnalisation a pour objectif, en particulier, d'obtenir une bonne stabilité colloïdale en milieu salin, par exemple une concentration de sel critique d'au moins 50 g/L, voire d'au moins 100 g/L. Elle a également pour fonction de moduler les interactions eau-roche de la nanoparticule (minimiser son adsorption sur la roche par exemple), voire de moduler (par exemple minimiser) les interactions eau-huile.

De telles interactions peuvent être mesurées lors d'une expérience de perméation sur carotte telle que décrite dans les exemples ci-dessous. Selon un mode de réalisation préféré, les nanoparticules selon l'invention présentent une adsorption minimale avec ce type de test.

Les radicaux -R greffés par covalence à base de liaisons silanes Si-R peuvent comprendre:
i. des groupements hydrophiles chargés, de préférence des composés organiques hydrophiles, de masses molaires inférieures à 5 000 g/mol et, mieux encore inférieures à 450 g/mol, de préférence choisis parmi les groupements organiques comportant au moins l'une des fonctions suivantes: alcool, acide carboxylique, amine, amide, ester, éther-oxyde, sulfonate, phosphonate et phosphinate, et une combinaison de ces fonctions,
ii. des groupements hydrophiles neutres, de préférence choisis parmi les dérivés sulfonates, les alcools, par exemple les sucres ou les polyols, de façon plus préférée, un polyalkylèneglycol ou un polyol, plus préférentiellement encore un polyéthylèneglycol, acide DiéthylèneTriaminePentaAcétique (DTPA), DTPA dithiolé (DTDTPA), un gluconamide ou un acide succinique, et les mélanges de ces groupements hydrophiles neutres,
iii. le cas échéant des groupements hydrophobes, par exemple choisis parmi des molécules contenant des chaînes alkyles ou fluorées.

Selon un mode de réalisation de l'invention, les radicaux -R des silanes Si-R en surface sont constitués pour au moins 50%, de préférence au moins 75%, de radicaux hydrophiles neutres, par exemple choisis parmi les polyols, par exemple le gluconamide, ou les polyéthers, par exemple le polyéthylèneglycol, ou leurs mélanges.

Avantageusement, les radicaux -R des liaisons silanes sont présents en surface à raison d'au moins un radical -R pour 10 nm² de surface, par exemple au moins un radical -R pour 1 nm², et de préférence au moins entre 1 et 10 radicaux -R par nm².

La fonctionnalisation de surface se fait par condensation des silanes à la surface de la matrice. On peut également ajouter des polysilanes (tels que le diéthylène-di(triméthoxy)silane) lors de la condensation pour passiver la surface de l'enrobage et lui assurer une meilleure tenue.

### Procédé de préparation d'une suspension colloïdale de nanoparticules

L'invention porte également sur un procédé de préparation d'une suspension colloïdale de nanoparticules utilisable comme traceur pour l'étude d'un gisement pétrolier.

Le procédé selon l'invention comprend les étapes suivantes :
- on synthétise un coeur de métal noble enrobé d'une matrice de polysiloxane préfonctionnalisée avec des silanes hydrophiles, au sein d'une microémulsion inverse,
- on extrait une solution colloïdale aqueuse de nanoparticules par décantation après déstabilisation de la microémulsion, par exemple dans un mélange eau/alcool, par exemple eau/isopropanol,
- on chauffe les nanoparticules à au moins 50°C, par exemple, environ 80°C.

Plus précisément, selon le procédé de l'invention, le coeur et la matrice sont synthétisés en microémulsion inverse. On peut, le cas échéant, pré-enrober les nanoparticules à ce stade avec un silane hydrophile.

La microémulsion est ensuite déstabilisée, par exemple avec un mélange eau/alcool tel qu'eau/isopropanol, de sorte à extraire les nanoparticules sous la forme d'une solution aqueuse colloïdale stable (i.e. qui ne précipite pas). En outre, on peut laver la solution extraite par décantation par exemple par filtration tangentielle. Ainsi, dans un mode de réalisation avantageux du procédé selon l'invention, les nanoparticules ne sont jamais en phase sèche.

Le procédé sans phase solide sèche permettrait d'obtenir des nanoparticules de taille plus homogène, et donc avec un indice de polydispersité plus faible.

Une autre étape particulièrement avantageuse du procédé selon l'invention est l'étape de chauffage, à au moins 50°C, par exemple au moins 60°C, au moins 70°C, par exemple à 80°C, pendant un temps suffisant pour permettre de densifier la couche d'enrobage, par exemple au moins 30 minutes, de préférence au moins 1 h. L'étape de chauffage permettrait d'augmenter la stabilité des particules, en particulier dans le temps en limitant les phénomènes d'agglomération. Cela permettrait aussi de densifier l'enrobage et de diminuer le nombre de groupement silanols libres de surface et plus généralement dans la couche d'enrobage. L'accrochage et la stabilité de la couche d'enrobage sont ainsi améliorés et permettraient également une protection supplémentaire des fluorophores contenus dans la matrice.

Le procédé selon l'invention permet donc d'obtenir des solutions colloïdales avec des nanoparticules aux propriétés avantageuses et distinctes de l'art antérieur, en particulier de plus faible diamètre moyen, par exemple, inférieure à 50 nm et un faible indice de polydispersité, par exemple inférieure à 0,3, voire inférieure à 0,1, et avec une très faible réactivité avec l'environnement extérieur (traceur furtif), tels que cela peut être mis en évidence à l'aide du test de perméation décrit en exemple.

Aussi, l'invention porte également sur une solution colloïdale de nanoparticules, susceptible d'être obtenue selon le procédé de l'invention décrit ci-dessus.

De manière encore plus préférée, les nanoparticules sont préparées selon le procédé ci-dessus et présentent les caractéristiques structurales avantageuses telles que définies plus haut. En particulier, les nanoparticules obtenues par le procédé ci-dessus, comprennent un coeur de métal noble, par exemple d'or, et une matrice comprenant des polysiloxanes incluant une fluorophore organométallique, par exemple un agent complexant lié à un lanthanide.

### Méthodologie

Les nanoparticules selon l'invention sont particulièrement utiles comme traceurs dans des eaux d'injection d'un gisement pétrolier, lesquels sont destinés à l'étude dudit gisement par diffusion au travers de celui-ci, en vue notamment de contrôler les flux entre un puits d'injection et un puits de production et/ou d'évaluer les volumes de pétrole en réserve dans le gisement.

Préalablement à l'analyse du liquide ayant diffusé, on concentre celui-ci, de préférence par filtration ou dialyse, et, plus préférentiellement encore, par filtration tangentielle et de préférence par utilisation de membrane de seuils de coupures inférieurs à 300 kDa (kilo Dalton).

De préférence, on cherche à détecter au moins deux types de signaux émis par les nanoparticules :
- un premier signal susceptible d'être émis par les fluorophores organométalliques et mesuré par fluorescence.
- et un second signal susceptible d'être émis par le métal noble (comme l'or, l'argent, le platine et leurs mélanges et/ou alliages), et mesuré par analyse chimique et/ou par ICP;
ledit métal noble constituant le coeur de la nanoparticule.

Dans un mode de réalisation préféré, pour mesurer la quantité de nanoparticules dans le liquide ayant diffusé, on privilégie une détection par fluorescence en temps résolu (pour détecter les fluorophores organométalliques) et/ou par ICP (pour la détection du métal noble dans le coeur des nanoparticules).

La méthode de détection par fluorescence en temps résolu est par exemple décrite dans l'article « ultrasensitive bioanalytical assays using time resolved fluorescence détection », Phnrmac. Thu. Vol. 66, pp. 207-335, 21995. La méthode de détection par ICP est par exemple décrite dans « application of laser ICP-MS in environmental analysis », Fresenieus Journal of Analytical Chemistry, 355 : 900-903 (1996).

La détection par fluorescence en temps résolu, c'est-à-dire enclenchée avec retard après excitation (i.e. quelques microsecondes) permet d'éliminer une grande partie de la luminescence intrinsèque au milieu solide étudié et de ne mesurer que celle relative à la nanoparticule traçante.

### Liquide d'injection (eaux) pour l'étude d'un milieu solide, à savoir ie. un gisement pétrolier

Selon un autre de ses objets, l'invention concerne un liquide d'injection dans un gisement pétrolier, caractérisé en ce qu'il comprend un traceur à base de nanoparticules selon l'invention comme définie plus haut.

Avantageusement, ce liquide comprend de l'eau et les nanoparticules telles que définies ci-dessus.

Les eaux d'injection peuvent comprendre, outre les nanoparticules, les éléments suivants : des tensioactifs, des petits polymères hydrophiles, des polyalcools (par exemple du diethylèneglycol), des sels et autres molécules classiquement utilisées en injection pétrolière.

### Description des figures

**Figure 1** **:** La figure 1 montre le spectre d'émission en temps résolu (délai 0,1 ms, temps d'acquisition 5 ms) des nanoparticules contenant Eu DTPA et fluorescéine sous excitation à 395 nm et le spectre d'excitation en temps résolu (délai 0,1 ms, temps d'acquisition 5 ms) de ces mêmes nanoparticules avec une émission fixe à 615 nm
**Figure 2****:** La figure 2 montre le spectre d'excitation en temps résolu (délai 0,1 ms, temps d'acquisition 5 ms) des nanoparticules contenant Eu DOTA et fluorescéine avec une émission fixe à 615 nm et le spectre d'émission en temps résolu (délai 0,1 ms, temps d'acquisition 5 ms) des particules contenant Eu DOTA et fluorescéine sous excitation à 395 nm
**Figure 3** **:** La figure 3a montre le spectre d'excitation en temps résolu (délai 0,1 ms, temps d'acquisition 5 ms) des particules contenant les nanoparticules contenant Tb et dérivés de pyridine avec une émission fixe à 545 nm
La figure 3b montre le spectre d'émission en temps résolu (délai 0,1 ms, temps d'acquisition 5 ms) des particules contenant les nanoparticules contenant Tb et dérivés de pyridine sous excitation à 246 nm
**Figure 4** **:** La figure 4 montre des courbes de perméation comparatives entre un traceur de référence (gris) et les nanoparticules (noir) selon le procédé de préparation 4. En abscisses, le volume écoulé. En ordonnées, l'absorption ou la fluorescence, normalisée aux valeurs initiales.

Après 180 mL, une solution d'eau de mer dégazée sans traceurs est injectée.

### Exemples

### Procédé de Préparation 1. Préparation d'une solution colloïdale de nanoparticules avec un coeur d'or et une matrice de silice encapsulant des fluorophores organiques dérivés de fluorescéine et des complexes (DTPA) d'europium.

Dans une bouteille de 10 mL, 200 mg d'acide diéthylènetriaminepentaacetiquebisanhydride (DTPABA), 0,130 mL d'APTES et 0,065 mL de triéthylamine sont introduits avec 4 mL de DMSO (diméthylsulfoxyde) sous agitation vigoureuse. Après 24 heures, 200 mg d'EuCl₃,6H₂O est ajouté. Après 48 heures la complexation est suffisante ; on réalise alors les étapes suivantes : dans une bouteille de 2,5 mL, 20 mg de FITC (fluorescéine isothiocyanate) sont introduites avec 0,5 mL d'APTES ((3-aminopropyl)triéthoxysilane) sous agitation vigoureuse. On homogénéise pendant 30 minutes à température ambiante.

Dans un ballon de 500 mL, 36 mL de Triton X-100 (tensioactif), 36 mL de *n*-hexanol (co-tensioactif), 150 mL de cyclohexane (huile) et 21 mL de solution aqueuse contenant 9 mL de HAuCl₄⊕3H₂O à 16,7 mM, 9 mL de MES (Sodium 2-mercaptoéthanesulfonate) à 32,8 mM et 3 mL de NaBH₄ à 412 mM sont introduits sous agitation vigoureuse. Après 5 minutes, 0,400 mL de solution contenant la fluorescéine est ajoutée dans la microémulsion avec 1 mL de la solution contenant le complexe d'europium. Puis 0,200 mL d'APTES et 1,5 mL de TEOS (tetraéthylorthosilicate) sont également ajoutés à la microémulsion.

La réaction de polymérisation de la silice est complétée par l'addition de 0,800 mL de NH₄OH après 10 minutes. On agite la microémulsion pendant 24 h à température ambiante.

Ensuite, 190 µL de Silane-gluconamide (N-(3-Triéthoxysilylpropyl)gluconamide) à 50% dans l'éthanol est ajouté à la microémulsion sous agitation à température ambiante.

Après 24 h, 190 µL de Silane-gluconamide sont à nouveau ajoutés à la solution toujours sous agitation à température ambiante.

Après 24 h, la microémulsion est déstabilisée dans une ampoule à décanter par ajout d'un mélange de 250 mL d'eau distillée et 250 mL d'isopropanol. La solution est laissée à décanter 15 minutes et la phase inférieure contenant les particules est récupérée.

La solution colloïdale récupérée est ensuite placée dans un système de filtration tangentielle VIVASPIN© à 300 kDa puis centrifugée à 4000 tr/min jusqu'à obtention d'un taux de purification supérieur à 500.

La solution ainsi obtenue est alors filtrée à 0,2 µm et diluée par 5 dans du DEG (diéthylèneglycol).

### Procédé de Préparation 2. Préparation d'une solution colloïdale de nanoparticules avec un coeur d'or et une matrice de silice encapsulant des fluorophores organiques dérivés de fluorescéine et des complexes (DOTA) d'europium.

La synthèse est similaire à celle décrite dans le procédé de préparation 1 à la différence que les 200 mg d'acide diéthylènetriaminepentaacetiquebisanhydride sont remplacés par 256 mg d'acide 1,4,7,10-tétraazacyclodécane-1,4,5,10-tétraacétique glutarique anhydride) (DOTAGA). Le reste de la synthèse est identique.

### Procédé de Préparation 3. Préparation d'une solution colloïdale de nanoparticules avec un coeur d'or et une matrice de silice encapsulant des molécules organiques contenant un cycle aromatique dérivées de pyridine (antenne) et des complexes de terbium.

Dans une bouteille de 2,5 mL, 85 mg de 2-Pyridinethioamide (antenne), 70 mg de NHS (N-hydroxysuccinimide) et 230 mg d'EDC (éthyl(diméthylaminopropyl)carbodiimide) sont introduites avec 2 mL de DMSO (diméthylsulfoxyde) sous agitation vigoureuse. Après 30 minutes, 140 µL d'APTES sont ajoutés et on attend 5 heures.

Ensuite, dans une bouteille de 2,5 mL, 1 lot de nanoparticules d'oxyde de terbium lyophilisées (diamètre 5 nm) achetés chez la société Nano-H SAS sont re-dispersées dans 2 mL d'eau distillée.

Dans un ballon de 500 mL, 36 mL de Triton X-100 (tensioactif), 36 mL de *n*-hexanol (co-tensioactif), 150 mL de cyclohexane (huile) et 21 mL de solution aqueuse contenant 9 mL de HAuCl₄⊕+3H₂O à 16,7 mM, 9 mL de MES (Sodium 2-mercaptoéthanesulfonate) à 32,8 mM et 3 mL de NaBH₄ à 412 mM sont introduits sous agitation vigoureuse. Après 5 minutes, 0,600 mL de solution contenant les antennes est ajoutée dans la microémulsion avec 2 mL de la solution contenant les particules de terbium. Ensuite 0,550 mL d'APTES et 1,5 mL de TEOS (tetraéthylorthosilicate) sont également ajoutés à la microémulsion.

La réaction de polymérisation de la silice est complétée par l'addition de 0,800 mL de NH₄OH après 10 minutes. On agite la microémulsion pendant 24 h à température ambiante.

La fonctionnalisation avec le silane-gluconamide et le traitement de la microémulsion sont comme décrit pour le procédé de préparation 1.

### Procédé de Préparation 4. Préparation d'une solution colloïdale de nanoparticules avec un coeur d'or et une matrice de silice encapsulant des molécules organiques contenant un cycle aromatique dérivées de fluorescéine et des particules contenant des complexes d'europium.

Dans une bouteille de 2,5 mL, 20 mg de FITC (fluorescéine isothiocyanate) sont introduites avec 0,5 mL d'APTES ((3-aminopropyl)triéthoxysilane) sous agitation vigoureuse. On homogénéise pendant 30 minutes à température ambiante.

Dans une bouteille de 2,5 mL, 1 lot de nanoparticules SRP-europium lyophilisées (diamètre 5 nm - 20 micromoles équivalent europium - Small Rigid Platform polysiloxane-DOTA(Eu)) (société Nano-H SAS, France) est re-dispersées dans 1,5 mL d'eau distillée.

Dans un ballon de 500 mL, 36 mL de Triton X-100 (tensioactif), 36 mL de *n*-hexanol (co-tensioactif), 150 mL de cyclohexane (huile) et 21 mL de solution aqueuse contenant 9 mL de HAuCl₄⊕3H2O à 16,7 mM, 9 mL de MES (Sodium 2-mercaptoéthanesulfonate) à 32,8 mM et 3 mL de NaBH4à 412 mM sont introduits sous agitation vigoureuse. Après 5 minutes, 0,400 mL de solution contenant la fluorescéine est ajoutée dans la microémulsion avec 1,5 mL de la solution contenant les particules d'europium. Dans la foulée 0,200 mL d'APTES et 1,5 mL de TEOS (tetraéthylorthosilicate) sont également ajoutés à la microémulsion.

La réaction de polymérisation de la silice est complétée par l'addition de 0,800 mL de NH4OH après 10 minutes. On agite la microémulsion pendant 24 h à température ambiante.

La fonctionnalisation avec le silane-gluconamide et le traitement de la microémulsion sont similaires au procédé de préparation 1.

Procédé de préparation **5a.** Solution colloïdale de nanoparticules avec un **coeur** d'or et une matrice de silice encapsulant des molécules organiques contenant un cycle aromatique de pyridine et des particules contenant des complexes d'europium.

La synthèse est similaire à celle décrite dans le procédé de préparation 1 à la différence de la fonctionnalisation effectuée dans la microémulsion. Le deuxième ajout de 190 µL de Silane-gluconamide est remplacé par un ajout de 450 mg de Silane (N-(Triéthoxysilylpropyl)-O-polyéthylèneoxideuréthane) correspondant à une quantité théorique de 2 silanes par nm² de surface.

### Procédé de préparation 5b. Solution colloïdale de nanoparticules avec un coeur d'or et une matrice de silice encapsulant des molécules organiques contenant un cycle aromatique de pyridine et des particules contenant des complexes d'europium.

La synthèse est similaire à celle décrite dans le procédé de préparation 1 à la différence de la fonctionnalisation effectuée dans la microémulsion. Le deuxième ajout de 190 µL de Silane-gluconamide est remplacé par un ajout de 340 µL de Silane ([Hydroxy(polyéthylènoxy)propyl]triéthoxysilane) à 50% dans l'éthanol, correspondant à une quantité théorique de 2 silanes par nm² de surface.

### Procédé de préparation 5c. Solution colloïdale de nanoparticules avec un coeur d'or et une matrice de silice encapsulant des molécules organiques contenant un cycle aromatique de pyridine et des particules contenant des complexes d'europium.

La synthèse est similaire à celle décrite dans le procédé de préparation 1 à la différence de la fonctionnalisation effectuée dans la microémulsion. Le deuxième ajout de 190 µL de Silane-gluconamide est remplacé par un ajout de 185 µL de Silane (acide N-(triméthoxysilylpropyl)éthylènediaminetriacétique) à 45% dans l'eau, correspondant à une quantité théorique de 2 silanes par nm² de surface.

### Procédé de préparation 5d. Solution colloïdale de nanoparticules avec un coeur d'or et une matrice de silice encapsulant des molécules organiques contenant un cycle aromatique de pyridine et des particules contenant des complexes d'europium.

La synthèse est similaire à celle décrite dans le procédé de préparation 1 à la différence de la fonctionnalisation effectuée dans la microémulsion. Le deuxième ajout de 190 µL de Silane-gluconamide est remplacé par un ajout de 60 µL de Silane (3-thiocyanatopropyltriéthoxysilane), ce qui correspond à une quantité théorique de 2 silanes par nm² de surface.

### Procédé de préparation 5e. Solution colloïdale de nanoparticules avec un coeur d'or et une matrice de silice encapsulant des molécules organiques contenant un cycle aromatique de pyridine et des particules contenant des complexes d'europium.

La synthèse est similaire à celle décrite dans le procédé de préparation 1 à la différence de la fonctionnalisation effectuée dans la microémulsion. Le deuxième ajout de 190 µL de Silane-gluconamide est remplacé par un ajout de 60 µL de Silane (3-isocyanatopropyltriéthoxysilane), ce qui correspond à une quantité théorique de 2 silanes par nm² de surface.

### Procédé de préparation 6a :

La solution obtenue selon le procédé de préparation 4 est post fonctionnalisée par un silane (N-(2-aminoéthyl)-3-aminopropyltriéthoxysilane). Dans un flacon de 15 mL, 20 µL de silane est dilué dans 10 mL de DEG. Dans un flacon de 15 mL, 10 µL de la solution de silane dilué (correspondant à une quantité théorique de 0,1 molécule de silane par nm² de surface de particule) est ajouté à 10 mL de la solution obtenue selon le procédé de préparation 4, la solution obtenue est mise sous agitation à 40°C pendant 48 h.

### Procédé de préparation 6b.

La solution obtenue selon le procédé de préparation 4 est post fonctionnalisée par un silane (anhydride 3-(triéthoxysilyl)propylsuccinique). Dans un flacon de 15 mL, 20 µL de silane est dilué dans 10 mL de DEG. Dans un flacon de 15 mL, 10 µL de la solution de silane dilué (correspondant à une quantité théorique de 0,1 molécule de silane par nm² de surface de particule) est ajouté à 10 mL de la solution obtenue selon le procédé de préparation 4, la solution obtenue est mise sous agitation à 40°C pendant 48 h.

### Procédé de préparation 6c.

La solution obtenue selon l'exemple 4 est post fonctionnalisée par un silane (O-(propargyloxy)-N-(triéthoxysilylpropyl)uréthane). Dans un flacon de 15 mL, 24 µL de silane est dilué dans 10 mL de DEG. Dans un flacon de 15 mL, 10 µL de la solution de silane dilué (correspondant à une quantité théorique de 0,1 molécule de silane par nm² de surface de particule) est ajouté à 10 mL de la solution obtenue dans l'exemple 4, la solution obtenue est mise sous agitation à 40°C pendant 48 h.

### Procédé de préparation 7. Solution colloïdale de nanoparticules avec un coeur d'or et une matrice de silice encapsulant des molécules de organiques contenant un cycle aromatique dérivées de pyridine et des complexes (DTPA) d'europium.

Dans une bouteille de 2,5 mL, 140 mg d'antennes (2,2':6',2"-terpyridine), 70 mg de NHS (N-hydroxysuccinimide) et 230 mg d'EDC (éthyl(diméthylaminopropyl)carbodiimide) sont introduites avec 2 mL de DMSO (diméthylsulfoxyde) sous agitation vigoureuse. Après 30 minutes, 140 µL d'APTES sont ajoutés.

Dans une bouteille de 10 mL, 200 mg d'acide diéthylènetriaminepentaacétique (DTPA), 0,130 mL d'APTES et 0,065 mL de triéthylamine sont introduits avec 4 mL de DMSO (diméthylsulfoxyde) sous agitation vigoureuse. Après 24 heures, 200 mg d'EuCl₃,6H₂O est ajouté. Après 48 heures la complexation est suffisante. Dans un ballon de 500 mL, 36 mL de Triton X-100 (tensioactif), 36 mL de *n*-hexanol (co-tensioactif), 150 mL de cyclohexane (huile) et 21 mL de solution aqueuse contenant 9 mL de HAuCl₄⊕3H₂O à 16,7 mM, 9 mL de MES (Sodium 2-mercaptoéthanesulfonate) à 32,8 mM et 3 mL de NaBH₄ à 412 mM sont introduits sous agitation vigoureuse. Après 5 minutes, 0,400 mL de solution contenant la fluorescéine est ajoutée dans la microémulsion avec 1 mL de la solution contenant le complexe d'europium. Ensuite, 0,200 mL d'APTES et 1,5 mL de TEOS (tetraéthylorthosilicate) sont également ajoutés à la microémulsion.

La réaction de polymérisation de la silice est complétée par l'addition de 0,800 mL de NH₄OH après 10 minutes. On agite la microémulsion pendant 24 h à température ambiante.

Ensuite, 190 µL de Silane-gluconamide (N-(3-Triéthoxysilylpropyl)gluconamide) à 50% dans l'éthanol est ajouté à la microémulsion sous agitation à température ambiante.

Après 24 h, 190 µL de Silane-gluconamide sont à nouveau ajoutés à la solution toujours sous agitation à température ambiante.

Après 24 h, la microémulsion est déstabilisée dans une ampoule à décanter par ajout d'un mélange de 250 mL d'eau distillée et 250 mL d'isopropanol. La solution est laissée à décanter 15 minutes et la phase inférieure contenant les particules est récupérée.

La solution colloïdale récupérée est ensuite placée dans un système de filtration VIVASPIN© à 300 kDa puis centrifugée à 4000 tr/min jusqu'à obtention d'un taux de purification supérieur à 500.

La solution ainsi obtenue est alors filtrée à 0,2 µm et diluée par 5 dans du DEG (diéthylèneglycol).

La solution obtenue est alors post-fonctionnalisée avec 3,72 µl de silane (N-(triéthoxysilylpropyl)-O-polyéthylèneoxideurethane) (correspondant à une quantité théorique de 0,1 molécule de silane par nm2 de surface de particule) à 40°C sous agitation pendant 48 h.

### Résultats

### Diamètre moyens et polydispersité des nanoparticules selon les procédés de préparation 1 à 5 (exemples 1 à 5).

Des solutions colloïdales de nanoparticules ont été préparées selon les procédés de préparations 1 à 5 (exemples 1 à 5 respectivement).

Le tableau suivant donne le diamètre moyen et l'indice de polydispersité des nanoparticules telles qu'obtenues selon les exemples 1 à 5.

| Exemples | Diamètre moyen | Polydispersité |
|---|---|---|
| Exemple 1 | 50 nm | 0,091 |
| Exemple 2 | 62 nm | 0,057 |
| Exemple 3 | 37 nm | 0,060 |
| Exemple 4 | 41 nm | 0,055 |
| Exemple 5a | 46 nm | 0,050 |
| Exemple 5b | 44 nm | 0,109 |
| Exemple 5c | 55 nm | 0,083 |
| Exemple 5d | 53 nm | 0,081 |
| Exemple 5e | 70 nm | 0,109 |

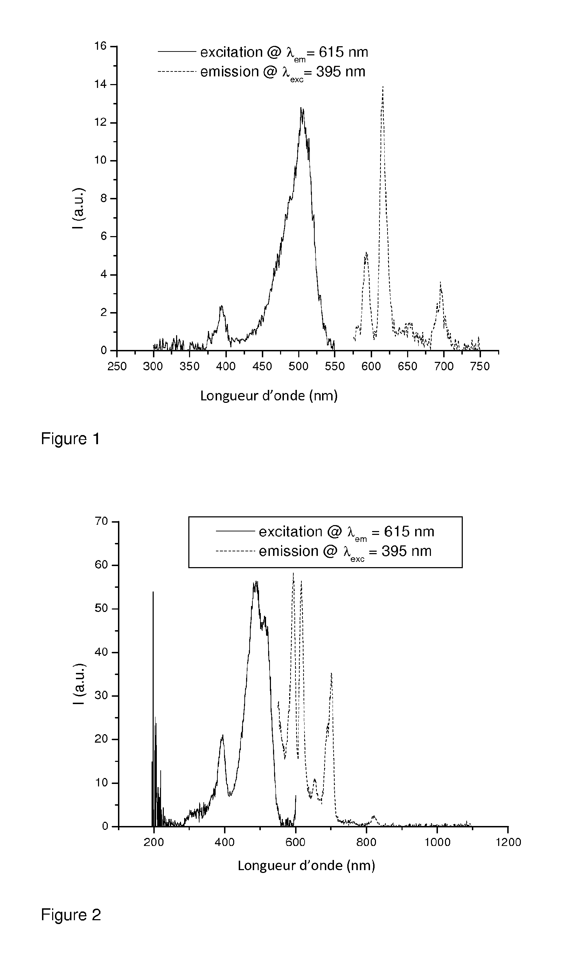

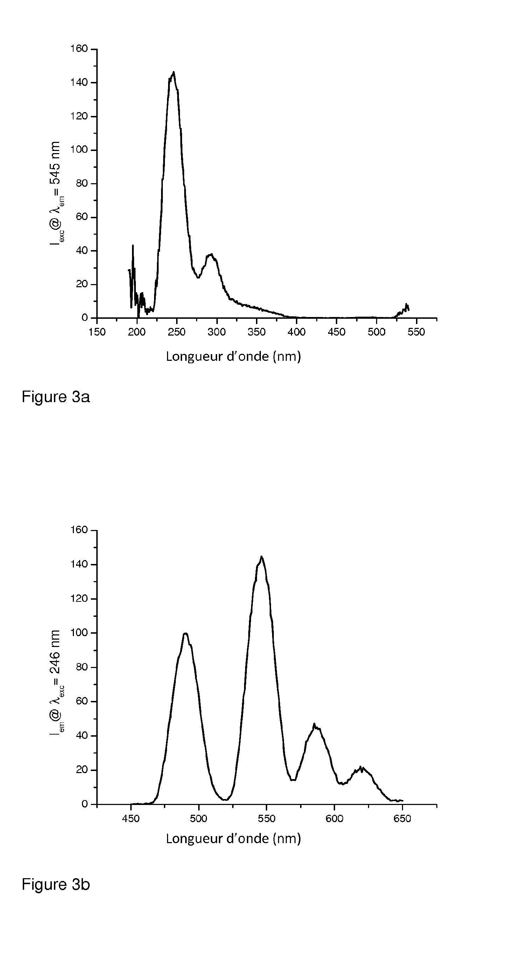

Les figures 1, 2 et 3 présentent les spectres d'excitation et d'émission avec un délai de 0,1 ms pour les exemples 1 à 3 respectivement. Ces données montrent que les nanoparticules présentent une bonne propriété de fluorescence en temps résolu.

### Comparaison des propriétés des nanoparticules avant et après étape de chauffage

Pour les exemples 6a à 6c, on a préparé des nanoparticules selon les procédés de préparation 6a à 6c.

Le tableau suivant résume le diamètre moyen, la polydispersité et le potentiel zêta des nanoparticules avant et après l'étape de chauffage, l'étape de chauffage consistant à chauffer la solution de nanoparticules après la post fonctionnalisation à 80°C durant 1 h et puis à la refroidir à température ambiante.

| Exemples | Valeurs avant chauffage Diamètre moyen Polydispersité Potentiel zêta | Valeurs après chauffage Diamètre moyen Polydispersité Potentiel zêta |
|---|---|---|
| Exemple 1 | 50 nm | 51 nm |
| | 0,091 | 0,075 |
| | n/d | n/d |
| Exemple 3 | 37 nm | 39 nm |
| | 0,060 | 0,077 |
| | n/d | n/d |
| Exemple 4 | 41 nm | 47 nm |
| | 0,055 | 0,026 |
| | n/d | n/d |
| Exemple 6a | 35 nm | 35 nm |
| | 0,053 | 0,066 |
| | 3,69 mV mesuré à pH 6,2 | 5,15 mV mesuré à pH 6,5 |
| Exemple 6b | 35 nm | 34 nm |
| | 0,034 | 0,116 |
| | 13,0 mV mesuré à pH 6,2 | -22,2 mV mesuré à pH 6,5 |
| Exemple 6c | 33 nm | 38 nm |
| | 0,077 | 0,035 |
| | 13,7 mV mesuré à pH 6,2 | -25,0 mV mesuré à pH 6,5 |

### Test de perméation

Nous décrivons ici la fabrication d'une cartouche permettant à un fluide de percoler à travers une carotte cylindrique de roche poreuse dans le sens longitudinal, sans perte de fluide par le côté de celle-ci et la perméation de particules.

Le matériel utilisé est composé de la carotte, de deux bouchons de même diamètre spécialement usinés pour permettre le vissage de raccords, de tube en PVC transparent, d'un patron en PTFE, de colle Araldite et d'un tube de joint silicone commercial.

Enfoncer un des deux bouchons dans le patron, le fixer avec la silicone, puis laisser sécher pendant 30 minutes. Préparer la colle Araldite dans une coupelle en aluminium puis placer la carotte sur le bouchon et la coller, laisser sécher quelques minutes. Faire de même pour le bouchon du dessus. Découper le tube PVC à la longueur correspondante, mettre de la silicone sur la base du tube puis le retourner sur le patron. Mettre le tout à l'étuve à 50°C pendant ½ heure.

Déterminer le volume de résine époxy en tenant compte du phénomène d'imbibition dans la roche (volume équivalent à 0,4 cm de diamètre de la colonne. La résine époxy est composée à 70% d'une base de résine (Epon 828 - Miller-Stephenson Chemical Company, Inc) et à 30% d'un durcisseur (Versamid 125 - Miller-Stephenson Chemical Company, Inc). Dans un gobelet plastique à usage unique, mélanger la résine avec le durcisseur pendant 10 minutes, puis placer le mélange à 50°C pendant 40 à 50 minutes jusqu'à obtention d'un mélange transparent et fluide. Verser lentement le mélange le long du tube PVC, puis laisser à température ambiante pendant deux heures. Placer ensuite l'ensemble à 70°C pendant deux heures. Laisser refroidir à température ambiante.

Une solution d'eau de mer synthétique est composée d'eau minérale (contenant 35 ppm de SiO₂ dissous) dans laquelle sont dissous les sels suivants :

| Sels | Concentration (g/L) |
|---|---|
| NaCl | 24,80 |
| KCl | 0,79 |
| MgCl₂ | 5,25 |
| CaCl₂ | 1,19 |
| NaHCO₃ | 0,10 |
| Na₂SO₄ | 4,16 |

A cette solution, est ajouté une quantité connue de d'iodure de potassium - l'ion iodure ayant un comportement de traceur idéal pour les tests de perméation - de manière à se trouver à une concentration de 1 g/L en KI. L'ensemble est dégazé par agitation vive sous vide pendant 5 à 10 minutes.

Nous disposons de suspensions concentrées dans l'eau ou dans le diéthylène glycol (DEG) nanoparticules, selon les exemples précédents. Nous diluons une quantité connue de ces suspensions dans la solution précédente à un volume de 300 à 500 mL de manière à se trouver à une concentration en particules comprise entre 0,1 et 10 mg/L. La suspension est laissée sous agitation légère pendant 10 minutes, puis filtrée sur une membrane de 0,2 µm.

Le montage est composé d'une pompe à double seringues permettant de fixer un débit compris entre 1 et 1000 mL par heure, typiquement entre 20 et 100 mL/h. Celle-ci dirige un fluide vers une cartouche contenant la roche poreuse. Le fluide percole à travers celle-ci, la pression différentielle de part et d'autre de la roche est suivie par un capteur. Le fluide est enfin dirigé vers un collecteur de fractions.

Dans le cas d'une perméation de particules, le fluide utilisé est une suspension diluée de particules et de KI. Dans le cas d'un lavage de la roche ou un test de désorption de particules après perméation, le fluide injecté est de l'eau de mer dégazée sans traceurs.

Dans ces fractions, nous mesurons d'une part l'absorption UV à λ = 254 nm du fluide. Celle-ci est très faible lorsque le fluide ne contient pas d'iodure, et devient importante en présence de celui-ci. L'absorption UV permet donc de suivre la perméation du traceur idéal. D'autre part, nous mesurons la fluorescence des fractions dans des conditions qui permettent de détecter le(s) fluorophore(s) présent(s) dans les particules. Cette technique permet donc de suivre la perméation des particules.

La roche a les caractéristiques suivantes :
Type : Bentheimer
Nature du matériau : grès, avec argiles (< 5%).
Dimensions : 5 cm de diamètre ; 12,5 cm de longueur
Perméabilité : 800 mD environ
Porosité : 20%
Particules utilisées, préparées selon exemple 4.

Le débit imposé par la pompe est de 60 mL/h. Les fractions collectées en sortie de roche sont d'un volume de 5 mL.

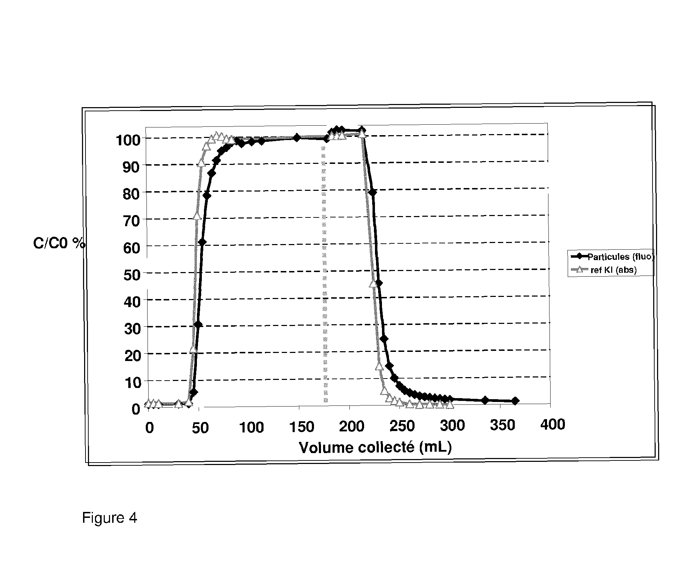

La figure 4 montre une courbe de perméation de nanoparticules préparées selon le procédé de préparation 4 (comprenant une étape de chauffage à 80°C pendant 1 heure) en comparaison avec le contrôle KI (traceur idéal). Les résultats de perméation montrent que les nanoparticules selon l'invention peuvent être aisément utilisées comme traceurs dans des eaux d'injection. On observe en effet une très bonne corrélation entre les traceurs nanoparticulaires fluorescents et le traceur idéal pris en référence (KI). En particulier, un taux de passage de nanoparticules supérieur à 99% est obtenu avec un écart moyen par rapport au traceur idéal inférieur à 10%. A la connaissance des inventeurs, de tels résultats n'avaient pas été obtenus avec des nanoparticules, possédant des fluorophores détectable par fluorescence résolue en temps, élaborées avec les procédés de l'art antérieur.

### MODES DE REALISATION

1. Nanoparticules pour leur utilisation dans l'étude d'un gisement pétrolier, lesdites nanoparticules étant caractérisées en ce qu'elles comprennent :
   i. un coeur constitué d'un métal noble ou d'un alliage de métaux nobles,
   ii. une matrice comprenant des polysiloxanes et un fluorophore organométallique lié de manière covalente aux polysiloxanes, ladite matrice étant fonctionnalisée à sa surface pour former des liaisons silanes Si-R, lesdits radicaux -R étant constitués pour au moins 50%, de préférence au moins 75% de radicaux hydrophiles neutres ou chargés, de préférence choisis parmi des polyéthers ou des polyols, ou leurs mélanges.
2. Nanoparticules selon le mode de réalisation 1, caractérisées en ce qu'elles comprennent un coeur essentiellement constitué de particules d'or.
3. Nanoparticules selon le mode de réalisation 1 ou 2, caractérisées en ce qu'elles ont un diamètre moyen inférieur à 100 nm, par exemple compris entre 20 nm et 100 nm, de préférence entre 20 nm et 50 nm et un indice de polydispersité inférieur à 0,3, de préférence inférieur à 0,1.
4. Nanoparticules selon l'un quelconque des modes de réalisation 1 à 3, caractérisées en ce que le fluorophore organométallique est choisi parmi les lanthanides, leurs alliages et leurs mélanges, lesdits lanthanides étant liés à des molécules complexantes.
5. Nanoparticules selon le mode de réalisation 4, caractérisées en ce que ladite molécule complexante a une coordinance d'au moins 6 et une constante de dissociation pKd supérieure à 10, de préférence supérieur à 15, de préférence, le DOTA ou l'un de ses dérivés.
6. Nanoparticules selon l'un quelconque des modes de réalisation précédents, caractérisées en ce que la matrice des nanoparticules est fonctionnalisée de sorte à ce que le potentiel zêta des nanoparticules, mesuré à un pH de 6,5, est inférieur à +10 mV.
7. Nanoparticules selon l'un quelconque des modes de réalisation précédents, caractérisées en ce que les radicaux -R des silanes Si-R en surface sont constitués pour au moins 50%, de préférence au moins 75%, de radicaux hydrophiles neutres.
8. Nanoparticules selon le mode de réalisation 7, caractérisées en ce que les radicaux hydrophiles neutres sont choisis parmi les polyols, par exemple le gluconamide, ou les polyéthers, par exemple le polyéthylèneglycol, ou leurs mélanges.
9. Nanoparticules selon l'un quelconque des modes de réalisation précédents, caractérisées en ce que les radicaux -R des liaisons silanes sont présents en surface à raison d'au moins un radical -R par nm² de surface et de préférence au moins entre 1 et 10 radicaux -R par nm².
10. Procédé de préparation d'une solution colloïdale de nanoparticules utilisables comme traceurs pour l'étude d'un gisement pétrolier, ledit procédé comprenant les étapes suivantes :
   i. on synthétise un coeur de métal noble enrobé d'une matrice de polysiloxane préfonctionnalisée avec des silanes hydrophiles au sein d'une microémulsion inverse,
   ii. on extrait une solution colloïdale aqueuse de nanoparticules par décantation après déstabilisation de la microémulsion, par exemple dans un mélange eau/isopropanol,
   iii. on chauffe les nanoparticules à au moins 50°C, par exemple, environ 80°C.
11. Procédé selon le mode de réalisation 10, caractérisé en ce que les nanoparticules ne sont jamais en phase sèche solide au cours dudit procédé.
12. Procédé selon le mode de réalisation 10 ou 11, caractérisé en ce que la solution colloïdale de nanoparticules est lavée après l'étape (ii) d'extraction, par exemple par filtration tangentielle.
13. Procédé selon l'un quelconque des modes de réalisation 10 à 12, caractérisé en ce que l'on transfert la solution colloïdale aqueuse de nanoparticules dans un solvant non aqueux, par exemple un polyol, de préférence du diéthylène glycol, avant l'étape de chauffage.
14. Procédé selon l'un quelconque des modes de réalisation 10 à 13, caractérisé en ce que l'on procède à une post-fonctionnalisation de la matrice des nanoparticules en présence d'un solvant non aqueux, par exemple un polyol, de préférence du diéthylène glycol, avant ou après l'étape de chauffage.
15. Procédé selon l'un quelconque des modes de réalisation 10 à 14, caractérisé en ce que l'on filtre la solution colloïdale de nanoparticules obtenue après chauffage et/ou post-fonctionnalisation.
16. Solution colloïdale de nanoparticules, susceptible d'être obtenue par le procédé selon l'un quelconque des modes de réalisation 10 à 15.
17. Solution colloïdale de nanoparticules selon le mode de réalisation 16, caractérisée en ce que les nanoparticules ont en outre les caractéristiques des nanoparticules définies selon l'un quelconque des modes de réalisation 1 à 9.
18. Liquide d'injection pour l'étude d'un gisement pétrolier, comprenant des nanoparticules selon l'un quelconque des modes de réalisation 1 à 9, ou une solution colloïdale selon l'un des modes de réalisation 16 ou 17.
19. Utilisation des nanoparticules telles que définies dans l'un quelconque des modes de réalisation 1 à 9 comme traceurs dans des eaux d'injection d'un gisement pétrolier, lesquels sont destinés à l'étude dudit gisement par diffusion au travers de celui-ci, en vue notamment de contrôler les flux entre un puits d'injection et un puits de production et/ou d'évaluer les volumes de pétrole en réserve dans le gisement.

## Revendications

1. Procédé de préparation d'une solution colloïdale de nanoparticules utilisables comme traceurs pour l'étude d'un gisement pétrolier, ledit procédé comprenant les étapes suivantes :
i. on synthétise un coeur de métal noble enrobé d'une matrice de polysiloxane préfonctionnalisée avec des silanes hydrophiles au sein d'une microémulsion inverse,
ii. on extrait une solution colloïdale aqueuse de nanoparticules par décantation après déstabilisation de la microémulsion, par exemple dans un mélange eau/isopropanol,
iii. on chauffe les nanoparticules à au moins 50°C, par exemple, environ 80°C.

2. Procédé selon la revendication 1, **caractérisé en ce que** les nanoparticules ne sont jamais en phase sèche solide au cours dudit procédé.

3. Procédé selon la revendication 1 ou 2, **caractérisé en ce que** la solution colloïdale de nanoparticules est lavée après l'étape (ii) d'extraction, par exemple par filtration tangentielle.

4. Procédé selon l'une quelconque des revendications 1 à 3, **caractérisé en ce que** l'on transfert la solution colloïdale aqueuse de nanoparticules dans un solvant non aqueux, par exemple un polyol, de préférence du diéthylène glycol, avant l'étape de chauffage.

5. Procédé selon l'une quelconque des revendications 1 à 4, **caractérisé en ce que** l'on procède à une post-fonctionnalisation de la matrice des nanoparticules en présence d'un solvant non aqueux, par exemple un polyol, de préférence du diéthylène glycol, avant ou après l'étape de chauffage.

6. Procédé selon l'une des revendications 1 à 5, **caractérisé en ce que** l'on filtre la solution colloïdale de nanoparticules obtenue après chauffage et/ou post-fonctionnalisation.

7. Procédé selon l'une des revendications 1 à 6, **caractérisé en ce que** les nanoparticules comprennent un coeur essentiellement constitué de particules d'or.

8. Procédé selon l'une des revendications 1 à 7, **caractérisé en ce que** les nanoparticules ont un diamètre moyen inférieur à 100 nm, par exemple compris entre 20 nm et 100 nm, de préférence entre 20 nm et 50 nm et un indice de polydispersité inférieur à 0,3, de préférence inférieur à 0,1.

9. Procédé selon l'une des revendications 1 à 8, **caractérisé en ce que** les nanoparticules comprennent un fluorophore organométallique choisi parmi les lanthanides, lesdits lanthanides étant liés à des molécules complexantes.

10. Procédé selon la revendication 9, **caractérisé en ce que** lesdites molécules complexantes ont une coordinance d'au moins 6 et une constante de dissociation pKd supérieure à 10, de préférence supérieure à 15, de préférence, il s'agit du DOTA ou l'un de ses dérivés.

11. Procédé selon l'une quelconque des revendications précédentes, **caractérisé en ce que** la matrice des nanoparticules est fonctionnalisée de sorte à ce que le potentiel zêta des nanoparticules, mesuré à un pH de 6,5, est inférieur à +10mV.

12. Solution colloïdale de nanoparticules, susceptible d'être obtenue par le procédé selon l'une quelconque des revendications 1 à 11.

13. Liquide d'injection pour l'étude d'un gisement pétrolier, comprenant une solution colloïdale selon la revendication 12.

14. Utilisation d'une solution colloïdale selon la revendication 12, comme traceurs dans des eaux d'injection d'un gisement pétrolier, lesquels sont destinés à l'étude dudit gisement par diffusion au travers de celui-ci, en vue notamment de contrôler les flux entre un puits d'injection et un puits de production et/ou d'évaluer les volumes de pétrole en réserve dans le gisement.
